# NEUE EUROPÄISCHE PATENTSCHRIFT

(11) **EP 2 017 944 B2**
(45) Veröffentlichungstag und Bekanntmachung des Hinweises auf die Entscheidung über den Einspruch: **16.07.2014**
(45) Hinweis auf die Patenterteilung: 14.09.2011
(21) Anmeldenummer: 08159598.5
(22) Anmeldetag: 03.07.2008
(51) Int. Cl.: H02K 1/18

(54) **Elektrischer Kleinstantrieb sowie Rückschlusselement und Verfahren zu dessen Herstellung**
Electric miniature drive and inference element and production method for same
Petit entraînement électrique ainsi qu'élément de reflux et son procédé de fabrication

(30) Priorität: 13.07.2007 DE 102007033076
(43) Veröffentlichungstag der Anmeldung: 21.01.2009
(73) Patentinhaber: Dr. Fritz Faulhaber GmbH & Co. KG, 71101 Schönaich (DE)
(72) Erfinder: Reutter, Kornelius, 71093, Weil im Schönbuch (DE); Teufel, Jürgen, 72184, Eutingen-Weitingen (DE)
(74) Vertreter: Patentanwälte Dr. Solf & Zapf

(56) Entgegenhaltungen:
- EP-A- 1 501 170
- EP-A2- 0 193 929
- CH-A5- 604 411
- DE-A1- 1 613 262
- DE-A1- 2 236 408
- DE-A1- 3 501 269
- DE-A1- 4 138 705
- DE-A1- 4 224 628
- DE-A1- 10 144 652
- DE-B- 1 034 256
- DE-C- 614 187
- DE-C- 974 758
- JP-A- S 605 749
- JP-A- 5 199 695
- US-A- 5 504 382
- US-A- 5 585 682
- US-A1- 2003 098 628
- US-A1- 2007 159 022
- US-B2- 6 822 364
- US-B2- 7 164 218

## Beschreibung

Die vorliegende Erfindung betrifft zunächst einen elektrischen Kleinstantrieb, insbesondere einen permanentmagneterregten Drehfeldantrieb, mit einem Stator, welcher einen geblechten Eisen-Rückschluss beinhaltet, in Form eines den Stator zylindrisch umschließende weichmagnetischen Rückschlusselementes mit einer Vielzahl von zu einem zylindrischen Blechpaket geschichteten, ringscheibenförmigen Blechlamellen.

Ferner betrifft die Erfindung ein weichmagnetisches Rückschlusselement für einen solchen Kleinstantrieb, bestehend aus einer Vielzahl von zu einem zylindrischen Blechpaket geschichteten, ringscheibenförmigen Blechlamellen.

Schließlich betrifft die Erfindung auch ein Verfahren zum Herstellen eines solchen Rückschlusselementes.

Das deutsche Gebrauchsmuster DE 90 10 318 U1 beschreibt einen elektrischen Kleinstmotor und einen zugehörigen Rückschlusszylinder der gattungsgemäßen Art. Dabei werden die Blechlamellen aus Elektroblech zunächst als Halbsegmente ausgestanzt und zu einem Blechpaket zusammengefügt, so dass zwei Zylinder-Halbschalen entstehen, die dann formschlüssig miteinander zu dem gesamten Rückschlusszylinder verbunden werden. Die einzelnen Blechlamellen werden stoffschlüssig miteinander verbunden, indem sie mit einer speziellen Lackschicht versehen werden. Zur Herstellung der Blechpakete werden dann die Blechlamellen erwärmt und über den schmelzenden Lack stoffschlüssig miteinander verbunden. Die Blechlamellen können aber auch mittels einer axialen Schweißnaht stoffschlüssig verbunden werden. Die Befestigung des so gebildeten geblechten Rückschlusszylinders auf dem Stator erfolgt durch kraftschlüssiges Verspannen von zwei Gehäusehälften eines äußeren Motorgehäuses. Die Herstellung dieses bekannten Antriebs und des Rückschlusselementes ist recht aufwändig und unter heutigen Gesichtspunkten nicht hinreichend prozesssicher. Zudem dürften durch die flächige elektrische Verbindung zwischen dem Blechpaket und dem Motorgehäuse recht hohe Wirbelstromverluste auftreten.

Aus der DE 60028427 T2 ist ein Montageverfahren zur Montage eines Stators eines Elektromotors bekannt, bei dem das aus Blechlamellen bestehende Blechpaket innerhalb einer Trägerhülse axial durch Endscheiben fixiert wird, die sich in der Innenwandung der Trägerhülse verkeilen. Bei diesem Verfahren besteht die Gefahr, dass sich die Endscheiben verkanten können, so dass eine exakte Fixierung des Blechpakets nicht erfolgt. Zudem treten aufgrund der flächigen Anlage des Blechpakets an der Trägerhülse hohe Wirbelstromverluste auf.

Die DE 42 24 628 A1 beschreibt ebenfalls einen Elektrokleinstmotor, der aber kein geblechtes Rückschlusselement aufweist. Vielmehr besteht ein Polgehäuse aus einem zylindrisch geformten, magnetisch leitenden Blech, wobei das Polgehäuse zur Vergrößerung des magnetischen Rückschlussquerschnittes von einem zusätzlichen Rückschlussring aus einem ebenfalls magnetisch leitenden Blech eng umschlossen ist. Somit besteht das Rückschlusselement aus zwei koaxialen zylindrischen Blechen. Der äußere Rückschlussring wird axial spielfrei auf dem inneren Polgehäuse gehalten, indem der Rückschlussring in zwei das Polgehäuse axial überragenden Bereichen freigeschnittene Lappen aufweist, die nach axialem Aufschieben des Rückschlussrings auf das Polgehäuse radial einwärts umgebogen werden, so dass sie die Stirnseiten des Polgehäuses übergreifen.

Die EP 1 501 170 A1 beschreibt eine elektrische Maschine mit einer besonderen Statorbefestigung. Die elektrische Maschine besteht aus einem Gehäuse, einem Stator und einem Rotor. Das Gehäuse weist wenigstens einen nach innen vorstehenden Bereich auf, um den gesamten Stator im Inneren des Gehäuses zu klemmen. Es geht in diesem Dokument somit nicht um die Halterung von zu einem zylindrischen Blechpaket geschichteten, ringscheibenförmigen Blechlamellen, vielmehr wird der gesamte, vorher montierte Stator innerhalb eines Gehäuses ohne Kleben befestigt. Über die Vormontage des Stators mit Blechlamellen ist in dem Dokument nichts offenbart. Es kann davon ausgegangen werden, dass die Statorbleche in bisher üblicher Weise miteinander verklebt sind, wozu herkömmlich so genannter Backlack verwendet wird. Gemäß der Lehre dieser Druckschrift ist demnach nur der gesamte Stator ohne Kleben durch Klemmen in dem äußeren Gehäuse befestigt.

Entsprechendes gilt ganz offensichtlich auch für die Veröffentlichung JP 05-199695 A.

Die US 2003/0098628 A1 beschreibt einen elektrischen Motor, wobei ein Statorkern aus mehreren Teilen über Sternmverbindurlgen zusammengesetzt wird.

Die weitere Veröffentlichung US 2005/0269895 A1 beschreibt einen bürstenlosen Gleichstrommotor, wobei ein Statorkern und eine Statorwicklung gemeinsam mit Harz vergossen sind, um eine Stator-Unterbaugruppe zu bilden. Dieser vergossene Stator wird dann in ein zylindrisches Joch eingepresst.

Ein weiterer Motor ist in der DE 690 04 513 T2 bzw. der EP 0 410 933 B1 beschrieben. Hier soll ein Stator von einer rohrförmigen Hülse aus isolierendem Material umgeben sein, z. B. aus synthetischem, thermisch schrumpfendem Polyesterfilm oder aus einer Klebeband-Umwicklung.

Die US 2 151 561 A beschreibt eine elektrische Maschine, wobei ein Blechpaket in einer Hülse gehalten ist. Der Kern wird in das Innere der Hülse eingesetzt, indem die Bleche als Stapel in die Hülse eingeführt werden. Dann soll eine relative Verdrehung praktisch nach Art einer Bajonettverbindung erfolgen. In einer bestimmten relativen Drehstellung soll dann eine Verrastung erreicht werden, wobei in dieser Stellung aber jedenfalls ein radialer Fügespalt zwischen dem Blechpaket und der Hülse vorhanden ist, weil die Hülse nach dem Verrasten eine zylindrische Form aufweist.

Schließlich werden gemäß dem Dokument US 1 816 859 Bleche über axiale Schweißlinien zu einem Paket verbunden. Dann wird das gesamte Paket zylindrisch überdreht und in radiale Vorsprünge eines Rahmens eingepresst.

Der vorliegenden Erfindung liegt die Aufgabe zu Grunde, einen elektrischen Kleinstantrieb und ein zugehöriges "geblechtes" Rückschlusselement der eingangs beschriebenen, gattungsgemäßen Art so zu verbessern, dass optimierte magnetische Eigenschaften mit geringen Verlusten erreicht werden und eine einfache, besonders prozesssichere und kostengünstige Herstellung ermöglicht wird. Dazu soll auch ein spezielles Verfahren zur Herstellung eines erfindungsgemäßen Rückschlusselementes angegeben werden.

Erfindungsgemäß wird dies durch die Merkmale des jeweiligen unabhängigen Anspruchs 1 bzw. 12 bzw. 14 erreicht. Vorteilhafte Ausgestaltungen sind in den jeweils abhängigen Ansprüchen definiert.

Erfindungsgemäß sind demnach die Blechlamellen des Blechpaketes in einer diese koaxial umschließenden Trägerhülse ausschließlich kraft- und formschlüssig und somit ohne Klebstoff oder dergleichen Stoffschlussmittel axial und radial gehalten, und zwar radial durch kraftschlüssige und daher spielfreie Anlage und axial unter einer die Blechlamellen zusammenpressenden Vorspannkraft formschlüssig. Dabei ist vorgesehen, dass die Blechlamellen des Blechpaketes im Bereich ihres Außenumfangs nur punktuell an mindestens drei, insbesondere sechs, über den Umfang verteilten Anlagepunkten mit der Trägerhülse in Anlagekontakt stehen und dadurch spielfrei in radialer Richtung kraftschlüssig gehalten sind. Indem die Trägerhülse aus einem sehr dünnen Blech, insbesondere Edelstahlblech, besteht und daher keinen magnetischen Fluss führt, werden durch die bloße Punktanlage der Rückschluss-Blechlamellen vorteilhafterweise nur sehr geringe Wirbelstromverluste verursacht. Die Blechlamellen bestehen zweckmäßig aus einem üblichen Elektroblech und weisen bevorzugt jeweils eine zumindest einseitige isolierende Beschichtung auf. Auch dadurch werden Wirbelströme vorteilhafterweise sehr gering gehalten.

Durch die erfindungsgemäße Ausgestaltung wird eine prozesssichere Herstellbarkeit erreicht, indem die Halterung des Blechpaketes mit Fixierung der einzelnen Blechlamellen ausschließlich durch Kraft- und Formschluss über radial nach innen geformte Formprägungen der Trägerhülse gewährleistet ist.

Gemäß der Erfindung sind die umfänglichen Anlagepunkte des Blechpaketes durch mindestens drei, vorzugsweise sechs, rippenartig radial nach innen geprägte und insbesondere achsparallel zumindest über die gesamte axiale Länge des Blechpaketes verlaufende Längssicken der Trägerhülse gebildet. Dabei bildet die Trägerhülse mit ihrer jeweils zwischen den Längssicken liegenden Innenfläche eine Spielpassung mit geringem Radialspiel und mit ihren Längssicken eine Presspassung mit radialer Vorspannung zu dem Blechpaket. Hierbei ist es vorteilhaft, wenn die Längssicken auf der radial nach innen weisenden Seite im Querschnitt sowie vorzugsweise auch im Längsschnitt gesehen leicht ballig (konvex gekrümmt) ausgebildet sind. Dabei handelt es sich um eine sehr geringe Krümmung, wobei der zylindrische Querschnitt der Trägerhülse über leichte stetige konkave Krümmungen in die schwach konvexe Krümmung der Längssicke übergeht. Hierdurch wird eine selbsttätige, optimale Anpassung mit Spielausgleich an die einzelnen Blechlamellen des Blechpaketes erreicht. Zudem sind die geschichteten Blechlamellen des Blechpaketes axial formschlüssig und unter axialer Vorspannkraft zwischen auf jeder Axialseite umfangsgemäß verteilt angeordneten, radial nach innen geprägten und die jeweilige Stirnringfläche des Blechpaketes übergreifende Halteprägungen der Trägerhülse gehalten.

Mit weiterem Vorteil kann die erfindungsgemäße Trägerhülse zusätzlich auch zur Befestigung von Lagerschilden des Kleinstantriebs auf beiden Axialseiten fungieren, indem jeder Lagerschild mit einem Halteabschnitt axial in die Trägerhülse eingreift und über umfangsgemäß verteilt angeordnete, radial nach innen geprägte und jeweils eine Haltekante des Lagerschildes hintergreifende Halteprägungen befestigt ist. Die Lagerschilde tragen Drehlager einer Drehlageranordnung für eine Rotorwelle eines innerhalb des Stators angeordneten Rotors. Somit bildet die erfindungsgemäße Trägerhülse gleichzeitig auch ein äußeres Motorgehäuse des Kleinstantriebs.

Was nun das erfindungsgemäße Herstellungsverfahren betrifft, so wird die Trägerhülse zunächst aus einem fachen Blechmaterial als flacher Zuschnitt ausgestanzt und vorteilhafterweise schon in diesem flachen Zustand mit den erforderlichen Formprägungen versehen. Einige der Halteprägungen, mit Ausnahme der auf einer Axialseite zur Anlage des Blechpaketes vorgesehenen Halteprägungen, werden dann wieder in die Ebene des Zuschnittes zurückverformt. Anschließend wird der flache Zuschnitt in die zylindrische Form der Trägerhülse umgeformt, insbesondere gerollt, wobei zwei in Umfangsrichtung angrenzende Längsränder über ineinander greifende Formschlusselemente, insbesondere einen so genannten Omega-Verschluss (Ω-Verschluss), sowie optional zusätzlich über zumindest punktuelle Stoffschlussverbindungen (beispielsweise Schweißpunkte) miteinander verbunden werden. Zur Bildung des Blechpaketes werden die Blechlamellen einzeln ringscheibenförmig ausgestanzt und vorzugsweise einzeln isolierend beschichtet, beispielsweise mit einem geeigneten Lack. Es wird dann eine entsprechende Anzahl der Blechlamellen aufeinander gestapelt. Erfindungsgemäß werden dann die Blechlamellen mit einer dafür geeigneten, dornartigen Vorrichtung zusammengepresst. Das Blechpaket wird nachfolgend in diesem verpressten, mit der Presskraft beaufschlagten Zustand der Blechlamellen bis zur axialen Anlage an den zuvor nicht zurückverformten Halteprägungen axial in die Trägerhülse eingeführt bzw. eingepresst. In diesem Zustand werden dann erst auf der anderen Axialseite des Blechpaketes die entsprechenden Halteprägungen erneut radial eingeprägt, so dass sie die Stirnseite des Blechpaketes übergreifen. Erst dann wird die axiale Presskraft der Blechlamellen gelöst. Die Blechlamellen dehnen sich dann im elastischen Bereich wieder etwas axial aus, so dass sich das Blechpaket auf beiden Axialseiten an die Halteprägungen der Trägerhülse mit Vorspannung anlegt. Auf diese Weise ist das Blechpaket radial über die Längssicken kraftschlüssig und spielfrei sowie axial zwischen den Halteprägungen formschlüssig und unter Aufrechterhaltung einer axialen Vorspannung gehalten.

Anhand eines in den Zeichnungen dargestellten, bevorzugten Ausführungsbeispiels soll die Erfindung genauer erläutert werden. Dabei zeigen:
- Fig.1: eine axiale Stirnansicht eines erfindungsgemäßen elektrischen Kleinstantriebes (Ansicht in Pfeilrichtung I gemäß Fig. 2),
- Fig. 2: einen stark vergrößerten Axialschnitt entsprechend dem Schnittverlauf II- II in Fig. 1,
- Fig.3: eine gesonderte Seitenansicht eines erfindungsgemäßen Rückschlusselementes in einem gegenüber Fig. 2 verkleinerten Maßstab,
- Fig. 4: eine Stirnansicht in Pfeilrichtung IV gemäß Fig. 3,
- Fig. 5: eine gegenüberliegende Stirnansicht in Pfeilrichtung V gemäß Fig. 3,
- Fig. 6: einen Axialschnitt entsprechend der Schnittebene VI-VI in Fig. 5,
- Fig. 7: einen Querschnitt in der Ebene VII-VII gemäß Fig. 3,
- Fig. 8: eine vergrößerte Darstellung des Bereiches VIII in Fig. 7,
- Fig. 9: eine vergrößerte Detailansicht des Bereiches IX in Fig. 6,
- Fig. 10: eine weitere vergrößerte Detailansicht im Bereich X gemäß Fig. 6,
- Fig. 11: einen vergrößerten Halb-Axialschnitt entsprechend der Schnittlinie XI-XI in Fig. 3 und
- Fig. 12: eine Ansicht eines ursprünglich flachen Zuschnittes für die erfindungsgemäße Trägerhülse.

In den verschiedenen Figuren der Zeichnung sind gleiche Teile stets mit den gleichen Bezugszeichen versehen.

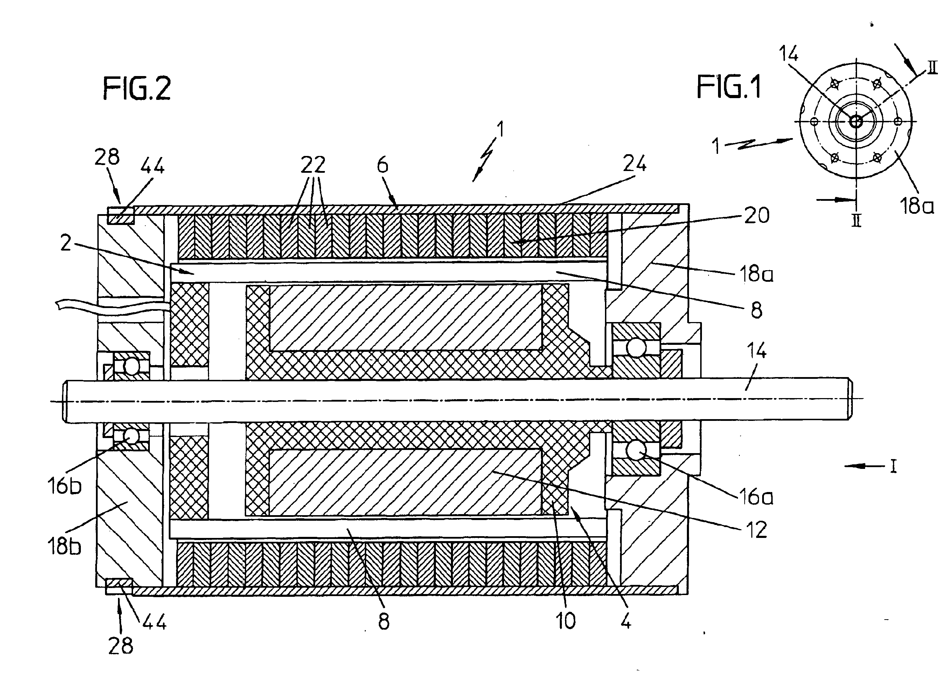

Wie sich zunächst aus Fig. 1 und 2 ergibt, besteht ein erfindungsgemäßer elektrischer Kleinstantrieb 1 (elektrischer Kleinstmotor) aus einem Stator 2, einem innerhalb des Stators 2 drehbar angeordneten Rotor 4 sowie einem den Stator 2 zylindrisch umschließenden magnetischen Rückschlusselement 6. Der Stator 2 besteht aus einem Statorkern mit Statorwicklungen 8. Der Rotor 4 besteht aus einem Rotorkörper 10 mit einem Rotormagnet 12. Die Rotorwelle 14 ist drehbar über zwei Drehlager 16a und 16b gelagert. Jedes Drehlager 16a, 16b ist in einem von zwei Lagerschilden 18a, 18b gehalten.

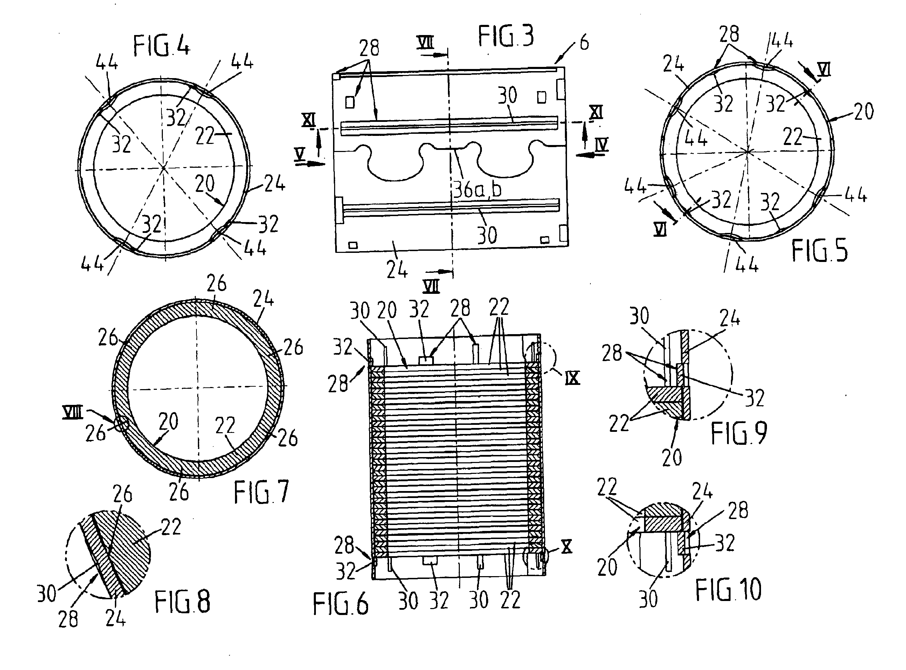

Das den Stator 2 zylindrisch umschließende Rückschlusselement 6 weist eine Vielzahl von zu einem zylindrischen Blechpaket 20 geschichteten, ringscheibenförmigen Blechlamellen 22 auf. Hierzu wird auch auf die vergrößerten Ansichten insbesondere in Fig. 9 bis 11 verwiesen.

Erfindungsgemäß weist das Rückschlusselement 6 eine Trägerhülse 24 auf, in der die Blechlamellen 22 des Blechpaketes 20 ausschließlich kraft- und formschlüssig, d. h. ohne jeglichen Klebstoff oder dergleichen Stoffschlussmittel, axial und radial gehalten sind. Es ist dabei vorgesehen, dass die Blechlamellen 22 des Blechpaketes 20 im Bereich ihres Außenumfangs nur punktuell an mindestens drei, vorzugsweise sechs, über den Umfang insbesondere gleichmäßig verteilten Anlagepunkten 26 - siehe dazu die Darstellung in Fig. 7 zusammen mit der Ausschnittvergrößerung in Fig. 8 - mit der Trägerhülse 24 in Anlagekontakt stehen und dadurch zumindest in radialer Richtung, vorzugsweise anteilig auch in axialer Richtung, kraftschlüssig gehalten sind. In axialer Richtung ist das Blechpaket 20 in der Trägerhülse 24 auch formschlüssig gehalten. Für die beschriebene Halterung des Blechpaketes 20 weist die Trägerhülse 24 geeignete, radial nach innen geformte Formprägungen 28 auf (siehe dazu insbesondere Fig. 3, 6 und 12). Damit ist das Blechpaket 20 innerhalb der Trägerhülse 24 mit axialer und radialer Vorspannung gehalten.

Die Trägerhülse 24 besteht bevorzugt aus einem dünnen Stahlblech mit einer sehr geringen Dicke im Bereich von 0,1 bis 0,5 mm, insbesondere etwa 0,3 mm. Bevorzugt handelt es sich um einen nicht rostenden Stahl mit geringem C-Anteil. Die Trägerhülse 24 führt deshalb keinen magnetischen Fluss.

Die Blechlamellen 22 bestehen aus einem üblichen Elektroblech. Vorzugsweise ist jede Blechlamelle 22 zumindest einseitig mit einer isolierenden Beschichtung beispielsweise aus einem geeigneten Lack versehen (in der Zeichnung nicht erkennbar). Diese Beschichtung trägt aber nicht zur Verbindung der Blechlamellen 22 bei, weil ja erfindungsgemäß die Blechlamellen 22 ausschließlich mechanisch in der Trägerhülse 24 gehalten sind.

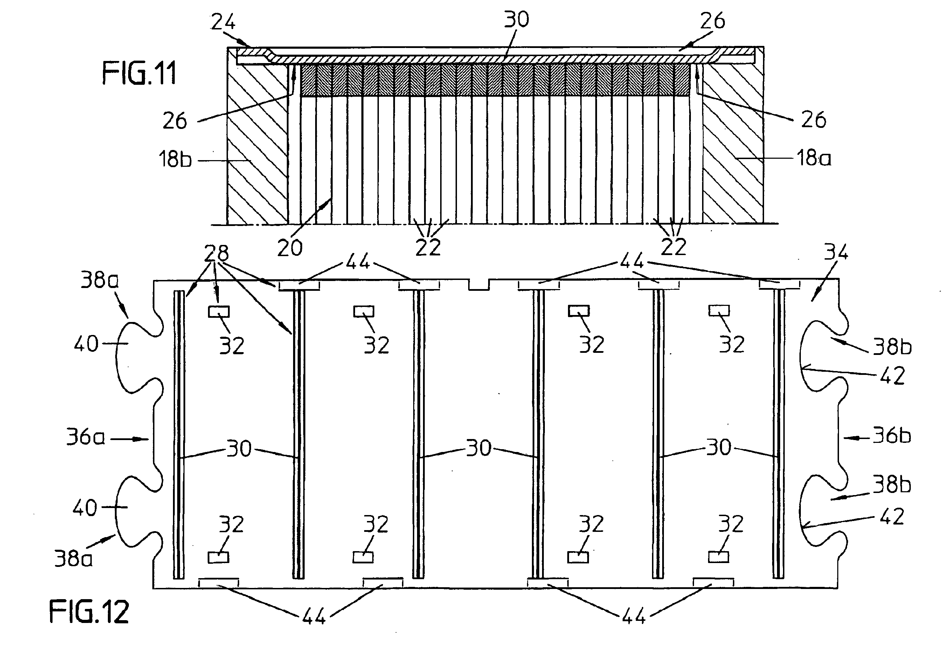

In bevorzugter Ausgestaltung sind die umfänglichen Anlagepunkte 26 des Blechpaketes 20 (vgl. nochmals Fig. 7 und 8) durch eine entsprechende Anzahl, vorzugsweise sechs, als Formprägungen 28 rippenartig radial nach innen geprägte und insbesondere achsparallel zumindest über die gesamte axiale Länge des Blechpaketes 20 verlaufende Längssicken 30 der Trägerhülse 24 gebildet. Wie sich insbesondere aus Fig. 8 ergibt, bildet hierdurch die Trägerhülse 24 mit ihrer zwischen den Längssicken 30 liegenden Innenfläche eine Spielpassung mit geringem Radialspiel und mit ihren Längssicken 30 eine Presspassung ohne Radialspiel zu dem Blechpaket 20 bzw. zu den einzelnen Blechlamellen 22. Die Längssicken 30 dienen bevorzugt auch zur Zentrierung der Lagerschilde 18a, 18b, siehe Fig. 11.

Wie am besten in den Fig. 6, 9 und 10 erkennbar ist, sind die geschichteten Blechlamellen 22 des Blechpaketes 20 axial formschlüssig zwischen als Formprägungen 28 auf jeder Axialseite umfangsgemäß verteilt angeordneten, radial nach innen geprägten und dadurch die jeweilige Stirnseite des Blechpaketes 20 übergreifende Halteprägungen 32 der Trägerhülse 24 gehalten. Gemäß Fig. 5 und 12 können auf jeder Axialseite beispielsweise vier Halteprägungen 32 vorgesehen sein. Wie sich insbesondere aus Fig. 9 und 10 ergibt, sind die Halteprägungen 32 jeweils als ein in Umfangsrichtung verlaufender, aus der Trägerhülse 24 über je zwei parallele Freischnitte bzw. Freistanzungen gebildeter Streifen ausgebildet, der aus seiner innenseitig konkaven Hülsenform radial nach innen konvex geprägt ist.

Die Trägerhülse 24 wird zweckmäßig aus einem ursprünglich flachen Blechmaterial als Zuschnitt 34 ausgestanzt (s. dazu Fig. 12) und dann in ihre zylindrische Form umgeformt, insbesondere gerollt. Dabei werden zwei in Umfangsrichtung aneinander angrenzende Längsränder 36a und 36b über ineinander greifende Formschlusselemente 38a, 38b miteinander verbunden. In der dargestellten, bevorzugten Ausführung handelt es sich um einen so genannten Omega-Verschluss, wobei die einen Formschlusselemente 38a als etwa Ω-förmige Ansätze 40 ausgebildet sind, und die anderen Formschlusselemente 38b sind als korrespondierende Ausnehmungen 42 gebildet. Die Ansätze 40 greifen formschlüssig in die Ausnehmungen 42 ein. Insgesamt sind die beiden Längsränder 36a und 36b somit in Negativkontur zueinander geformt. Hierzu wird auch auf die montierte Stellung in Fig. 3 verwiesen. Optional können die Längsränder 36a, b der Trägerhülse 24 zusätzlich zumindest punktuell, beispielsweise über einige Schweißpunkte, stoffschlüssig miteinander verbunden sein.

Vorteilhafterweise dient die Trägerhülse 24 des erfindungsgemäßen Rückschlusselementes 6 auch zur Halterung der Lagerschilde 18a und 18b. Dazu greift jeder Lagerschild 18a, b mit einem Halteabschnitt axial in die Trägerhülse 24 ein und ist über mehrere umfangsgemäß verteilt angeordnete, als Formprägungen 28 radial nach innen geprägte und jeweils eine Haltekante des Lagerschildes hintergreifende Halteprägungen 44 befestigt. Gemäß Fig. 12 können beispielsweise auf einer Axialseite vier und auf der anderen Axialseite fünf Halteprägungen 44 vorgesehen sein, was allerdings keine Beschränkung darstellt. Jede dieser Halteprägungen 44 ist unmittelbar im stirnseitigen Randbereich der Trägerhülse 24 angeordnet und durch einen in Umfangsrichtung verlaufenden Freischnitt streifenförmig ausgebildet und analog zu den Halteprägungen 32 für das Blechpaket 20 radial konvex nach innen geprägt (s. hierzu die Darstellungen in Fig. 4 und 5).

Wie oben bereits erwähnt wurde, bezieht sich die Erfindung nicht nur auf den gesamten Kleinstantrieb 1, sondern auch auf die wesentliche Komponente des separaten Rückschlusselementes 6. Dazu wird auf die bisherigen Erläuterungen verwiesen.

Im Folgenden soll das erfindungsgemäße Verfahren zum Herstellen des Rückschlusselementes 6 genauer erläutert werden. Erfindungsgemäß wird dazu eine Vielzahl von einzelnen, zuvor ausgestanzten ringscheibenförmigen Blechlamellen 22 zu einem zylindrischen Blechpaket 20 geschichtet und zur Halterung derart in eine Trägerhülse 24 eingesetzt, dass die Blechlamellen 22 ausschließlich kraft- und formschlüssig, d. h. ohne Klebstoff oder dergleichen Stoffschlussmittel, axial und radial gehalten werden. Im Einzelnen werden dazu folgende Verfahrensschritte angewandt:

Zunächst wird aus einem geeigneten Blechmaterial, insbesondere aus einem Edelstahlblech, ein flacher Zuschnitt 34, wie er beispielhaft in Fig. 12 dargestellt ist, für die Trägerhülse 24 ausgestanzt. Dieser Zuschnitt 34 wird dann in seinem noch flachen, ebenen Zustand mit allen erforderlichen Formprägungen 28 versehen, und zwar konkret mit den Längssicken 30 und den Halteprägungen 32 für das Blechpaket 20 sowie vorzugsweise mit den Halteprägungen 44 für die Lagerschilde 18a, b. Bezüglich der Halteprägungen 32, 44 werden hierdurch jeweils streifenförmige Abschnitte über in Umfangsrichtung verlaufende Schlitze freigeschnitten bzw. freigestanzt. Anschließend werden dann die Halteprägungen 32, 44 - mit Ausnahme der auf einer Axialseite zur Anlage des Blechpaketes 20 vorgesehenen Halteprägungen 32 - wieder in die Ebene des flachen Zuschnittes 34 zurückverformt. Der Sinn dieser Maßnahme wird im Folgenden noch erläutert werden.

Der flache Zuschnitt 34 gemäß Fig. 12 wird dann in die zylindrische Form der Trägerhülse 24 umgeformt, insbesondere gerollt. Die beiden angrenzenden Längsränder 36a, b werden über die ineinander greifenden Formschlusselemente 38a, b und optional über zusätzliche punktuelle Stoffschlussverbindungen, insbesondere Laser-Schweißpunkte verbunden.

Unabhängig von dieser beschriebenen Herstellung der Trägerhülse 24 werden die Blechlamellen 22 einzeln ringscheibenförmig ausgestanzt und vorzugsweise einzeln isolierend beschichtet, beispielsweise lackiert. Es wird dann eine bestimmte, von der Dicke der einzelnen Blechlamellen 22 und der gewünschten axialen Länge des Blechpaketes 20 abhängende Anzahl von Blechlamellen 22 zur Bildung des Blechpaketes 20 aufeinander gestapelt. Die Blechlamellen 22 werden dann mit einem geeigneten Stempel zusammengedrückt. In diesem Zustand werden die einzelnen Blechlamellen 22 bezüglich ihrer radial gemessenen Höhe kontrolliert und eventuell korrigiert oder ausgetauscht. Zum Einsetzen des so vorfixierten Blechpaketes 20 in die Trägerhülse 24 werden die Blechlamellen 22 mit einer axialen Presskraft derart zusammengedrückt, dass das gesamte Blechpaket 20 etwas elastisch komprimiert wird. In diesem verpressten Zustand wird das Blechpaket 20 in die Trägerhülse 24 axial eingeführt, und zwar auf Grund der Längssicken 30 kraftschlüssig mit Presspassung eingepresst. Dies ist möglich, weil die auf dieser Axialseite, von der aus das Blechpaket 20 eingepresst wird, die Halteprägungen 32 und 44 ja wieder in die Zylinderform der Trägerhülse 24 zurückverformt wurden. Das Einsetzen des Blechpaketes 20 erfolgt bis zur axialen Anlage an den auf der anderen Axialseite zuvor nicht zurückverformten Halteprägungen 32. In diesem noch verpressten Zustand des Blechpaketes 20 werden die Halteprägungen 32 auf der anderen Axialseite des Blechpaketes 20 erneut radial nach innen eingeprägt, so dass sie die Stirnseite des Blechpaketes 20 radial und axial übergreifen. Erst dann wird die axiale Presskraft der Blechlamellen 22 gelöst. Das Blechpaket 20 dehnt sich dann elastisch wieder etwas axial aus, so dass sich das Blechpaket 20 formschlüssig und unter Aufrechterhaltung einer Rest-Vorspannung zwischen die axial gegenüberliegenden Halteprägungen 32 anlegt. Zur Presskraft-Beaufschlagung wird ein geeignetes, nicht dargestelltes, z. B. dornartiges und innen durch die Blechlamellen 22 führbares Hilfswerkzeug verwendet.

Zur anschließenden Montage der Lagerschilde 18a, b werden diese mit ihren Halteabschnitten beidseitig in die Trägerhülse 24 eingesteckt. Dies ist möglich, weil auch die Halteprägungen 44 zuvor in die Zylinderform zurückverformt wurden. Zur Befestigung der Lagerschilde werden dann die Halteprägungen 44 wieder radial nach innen geprägt. Hierzu wird in Fig. 2 auf die im Bereich des linken Lagerschildes 18b erkennbaren Halteprägungen 44 verwiesen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Elektrischer Kleinstantrieb (1), insbesondere permanentmagneterregter Drehfeldantrieb, mit einem Stator (2) und einem den Stator (2) zylindrisch umschließenden weichmagnetischen Rückschlusselement (6) mit einer Vielzahl von zu einem zylindrischen Blechpaket (20) geschichteten, ringscheibenförmigen Blechlamellen (22),
**dadurch gekennzeichnet, dass** die Blechlamellen (22) des Blechpaketes (20) in einer diese koaxial umschließenden Trägerhülse (24) ausschließlich in radialer Richtung mit Vorspannung kraftschlüssig und in axialer Richtung unter axialer Vorspannung formschlüssig und ohne Klebstoff oder dergleichen Stoffschlussmittel gehalten sind, wobei die Blechlamellen (22) des Blechpaketes (20) im Bereich ihres Außenumfangs nur punktuell an mindestens drei über den Umfang verteilten Anlagepunkten (26) mit der Trägerhülse (24) in Anlagekontakt stehen und dadurch zumindest kraftschlüssig gehalten sind, und wobei die geschichteten Blechlamellen (22) des Blechpaketes (20) axial zwischen auf jeder Axialseite umfangsgemäß verteilt angeordneten, radial nach innen geprägten Halteprägungen (32) der Trägerhülse (24) gehalten sind.

2. Kleinstantrieb nach Anspruch 1,
**dadurch gekennzeichnet, dass** die Blechlamellen (22) des Blechpaketes (20) im Bereich ihres Außenumfangs nur punktuell an sechs über den Umfang verteilten Anlagepunkten (26) mit der Trägerhülse (24) in Anlagekontakt stehen.

3. Kleinstantrieb nach einem der Anspruch 1 oder 2,
**dadurch gekennzeichnet, dass** die Trägerhülse (24) zur Halterung des Blechpaketes (20) radial nach innen geformte Formprägungen (28) aufweist.

4. Kleinstantrieb nach einem der Ansprüche 1 bis 3,
**dadurch gekennzeichnet, dass** die Trägerhülse (24) aus einem dünnen Edelstahlblech besteht.

5. Kleinstantrieb nach einem der Ansprüche 1 bis 4,
**dadurch gekennzeichnet, dass** die Blechlamellen (22) aus Elektroblech bestehen, wobei vorzugsweise jede einzelne Blechlamelle (22) für sich eine isolierende Beschichtung aufweist.

6. Kleinstantrieb nach einem der Ansprüche 1 bis 5,
**dadurch gekennzeichnet, dass** die umfänglichen Anlagepunkte (26) des Blechpaketes (20) durch mindestens drei, vorzugsweise sechs, rippenartig radial nach innen geprägte und insbesondere achsparallel zumindest über die gesamte axiale Länge des Blechpaketes (20) verlaufende Längssicken (30) der Trägerhülse (24) gebildet sind, wobei die Trägerhülse (24) mit ihrer zwischen den Längssicken (30) liegenden Innenfläche eine Spielpassung und mit ihren Längssicken (30) eine Presspassung zu dem Blechpaket (20) bildet.

7. Kleinstantrieb nach einem der Ansprüche 1 bis 6,
**dadurch gekennzeichnet, dass** die Trägerhülse (24) als Zuschnitt (34) aus einem ursprünglich flachen Blechmaterial ausgestanzt und in ihre zylindrische Form umgeformt ist, wobei zwei in Umfangsrichtung aneinander angrenzende Längsränder (36a, 36b) über ineinander greifende Formschlusselemente (38a, 38b) verbunden sind.

8. Kleinstantrieb nach Anspruch 7,
**dadurch gekennzeichnet, dass** die Längsränder (36a, 36b) zusätzlich zu den ineinander greifenden Formschlusselementen (38a, 38b) zumindest punktuell, insbesondere über Schweißpunkte, stoffschlüssig verbunden sind.

9. Kleinstantrieb nach einem der Ansprüche 1 bis 8,
**dadurch gekennzeichnet, dass** auf beiden Axialseiten der Trägerhülse (24) ein Lagerschild (18a, 18b) befestigt ist, und zwar vorzugsweise indem jeder Lagerschild (18a, 18b) mit einem Halteabschnitt axial in die Trägerhülse (24) eingreift und über umfangsgemäß verteilt angeordnete, radial nach innen geprägte und jeweils eine Haltekante des Lagerschildes hintergreifende Halteprägungen (44) befestigt ist.

10. Kleinstantrieb nach Anspruch 9,
**dadurch gekennzeichnet, dass** die Lagerschilde (18a, 18b) durch die Längssicken (30) zentriert werden.

11. Kleinstantrieb nach Anspruch 9 oder 10,
**dadurch gekennzeichnet, dass** die Lagerschilde (18a, 18b) eine Drehlageranordnung (16a, 16b) für eine Rotorwelle (14) eines innerhalb des Stators (2) angeordneten Rotors (4) tragen.

12. Weichmagnetisches Rückschlusselement (6) für einen Kleinstantrieb (1) nach einem der Ansprüche 1 bis 11, bestehend aus einer Vielzahl von zu einem zylindrischen Blechpaket (20) geschichteten ringscheibenförmigen Blechlamellen (22),
**dadurch gekennzeichnet, dass** die Blechlamellen (22) in einer das Blechpaket (20) umschließenden Trägerhülse (24) ausschließlich in radialer Richtung mit Vorspannung kraftschlüssig und in axialer Richtung unter axialer Vorspannung formschlüssig und ohne Klebstoff oder dergleichen Stoffschlussmittel gehalten sind, wobei die Blechlamellen (22) des Blechpaketes (20) im Bereich ihres Außenumfangs nur punktuell an mindestens drei über den Umfang verteilten Anlagepunkten (26) mit der Trägerhülse (24) in Anlagekontakt stehen und dadurch zumindest kraftschlüssig gehalten sind, und wobei die geschichteten Blechlamellen (22) des Blechpaketes (20) axial zwischen auf jeder Axialseite umfangsgemäß verteilt angeordneten, radial nach innen geprägten Halteprägungen (32) der Trägerhülse (24) gehalten sind.

13. Rückschlusselement nach Anspruch 12,
**gekennzeichnet durch** die kennzeichnenden Merkmale mindestens eines der Ansprüche 2 bis 11.

14. Verfahren zum Herstellen eines Rückschlusselementes (6) nach Anspruch 12 oder 13 für einen elektrischen Kleinstantrieb (1) nach einem der Ansprüche 1 bis 11,
**dadurch gekennzeichnet, dass** eine Vielzahl von einzelnen ringscheibenförmigen Blechlamellen (22) zu einem zylindrischen Blechpaket (20) geschichtet und zur Halterung derart in eine Trägerhülse (24) eingesetzt wird, dass die Blechlamellen (22) ausschließlich in radialer Richtung mit Vorspannung kraftschlüssig und in axialer Richtung unter axialer Vorspannung formschlüssig und ohne Klebstoff oder dergleichen Stoffschlussmittel gehalten sind, wobei folgende Verfahrensschritte durchgeführt werden:
a) Ausstanzen eines flachen Zuschnittes (34) für die Trägerhülse (24) aus einem Blechmaterial, insbesondere aus Edelstahlblech,
b) Versehen des flachen Zuschnittes (34) mit allen erforderlichen Formprägungen (28), und zwar mit den Längssicken (30) und den Halteprägungen (32, 44) für das Blechpaket (20) und vorzugsweise für die Lagerschilde (18a, 18b),
c) Rückverformen der Halteprägungen (32, 44) in die Ebene des flachen Zuschnittes (34) mit Ausnahme der auf einer Axialseite zur Anlage des Blechpaketes (20) vorgesehenen Halteprägungen (32),
d) Umformen des flachen Zuschnittes (34) in die zylindrische Form der Trägerhülse (24), wobei zwei Längsränder (36a, 36b) über die ineinander greifenden Formschlusselemente (38a, 38b) und vorzugsweise über zusätzliche Schweißpunkte verbunden werden,
e) Bilden eines zylindrischen Blechpaketes (20) durch Aufeinanderstapeln einer Vielzahl von zuvor einzeln ringscheibenförmig ausgestanzten und vorzugsweise einzeln isolierend beschichteten Blechlamellen (22),
f) Zusammenpressen der Blechlamellen (22) mit einer bestimmten Presskraft,
g) axiales Einführen des Blechpaketes (20) in die Trägerhülse (24) in dem verpressten, mit der Presskraft beaufschlagten Zustand der Blechlamellen (22) und unter kraftschlüssiger Anlage an den Längssicken (30) bis zur axialen Anlage an den Halteprägungen (32),
h) erneutes radiales Einprägen der Halteprägungen (32) auf der anderen Axialseite des Blechpaketes (20),
i) Lösen der axialen Presskraft der Blechlamellen (22), wobei sich das Blechpaket (20) durch axiale elastische Ausdehnung unter Aufrechterhaltung einer axialen Vorspannung formschlüssig zwischen die axial beidseitigen Halteprägungen (32) anlegt.

## Claims

1. Miniature electrical drive (1), in particular a rotating field drive with permanent magnet excitation, having a stator (2) and a soft-magnetic return path element (6) which cylindrically surrounds the stator (2) and has a multiplicity of sheet-metal laminations (22) which are in the form of annular discs and are arranged in layers to form a cylindrical laminated core (20),
**characterized in that** the sheet-metal laminations (22) in the laminated core (20) are held prestressed in a force-locked manner exclusively in the radial direction, and are held axially prestressed in a form-locked manner in the axial direction, and without adhesive or suchlike materially joining means, in a supporting sleeve (24) which coaxially surrounds said sheet-metal laminations (22), the sheet-metal laminations (22) in the laminated core (20) making touching contact with the supporting sleeve (24) in the area of their external circumference only at points, at least three contact points (26) which are distributed around the circumference, and thereby being held at least in a force-locked manner, and the layered sheet-metal laminations (22) of the laminated core (20) being held axially between holding embossed areas (32) on the supporting sleeve (24), which are arranged distributed around the circumference on each axial side and project radially inwards.

2. Miniature drive according to Claim 1,
**characterized in that** the sheet-metal laminations (22) in the laminated core (20) make touching contact with the supporting sleeve (24) in the area of their external circumference only at points, at six contact points (26) which are distributed around the circumference.

3. Miniature drive according to Claim 1 or 2, **characterized in that** the supporting sleeve (24) has embossed areas (28), which are shaped radially inwards, in order to hold the laminated core (20).

4. Miniature drive according to one of Claims 1 to 3, **characterized in that** the supporting sleeve (24) is composed of a thin stainless-steel sheet.

5. Miniature drive according to one of Claims 1 to 4, **characterized in that** the sheet-metal laminations (22) are composed of magnetic sheet steel, preferably with each individual sheet-metal laminate (22) having its own insulating coating.

6. Miniature drive according to one of Claims 1 to 5, **characterized in that** the circumferential contact points (26) of the laminated core (20) are formed by at least three, and preferably six, longitudinal beads (30) on the supporting sleeve (24), which longitudinal beads (30) project like ribs pointing radially inwards and run in particular parallel to the axis, at least over the entire axial length of the laminated core (20), with the inner surface, located between the longitudinal beads (30), of the supporting sleeve (24) forming a clearance fit with the laminated core (20), and with the longitudinal beads (30) of said supporting sleeve (24) forming an interference fit with the laminated core (20).

7. Miniature drive according to one of Claims 1 to 6, **characterized in that** the supporting sleeve (24) is stamped as a blank (34) from an originally flat sheet-metal material and is formed into its cylindrical shape, with two mutually adjacent longitudinal edges (36a, 36b) in the circumferential direction being connected via form-locking elements (38a, 38b) which engage in one another.

8. Miniature drive according to Claim 7,
**characterized in that** the longitudinal edges (36a, 36b) are in addition connected in a materially joined manner at least at points, in particular by means of spot welds, to the form-locking elements (38a, 38b) which engage in one another.

9. Miniature drive according to one of Claims 1 to 8, **characterized in that** an end shield (18a, 18b) is mounted on both axial sides of the supporting sleeve (24), to be precise preferably by a holding section on each end shield (18a, 18b) engaging axially in the supporting sleeve (24) and being attached by means of holding embossed areas (44) which are arranged distributed around the circumference, project radially inwards and each engage behind a holding edge on the end shield.

10. Miniature drive according to Claim 9,
**characterized in that** the end shields (18a, 18b) are centred by means of the longitudinal beads (30).

11. Miniature drive according to Claim 9 or 10, **characterized in that** the end shields (18a, 18b) are fitted with a rotating bearing arrangement (16a, 16b) for a rotor shaft (14) of a rotor (4) which is arranged within the stator (2).

12. Soft-magnetic return path element (6) for a miniature drive (1) according to one of Claims 1 to 11, comprising a multiplicity of sheet-metal laminations (22) which are in the form of annular discs and are arranged in layers to form a cylindrical laminated core (20),
**characterized in that** the sheet-metal laminations (22) are held prestressed in a force-locked manner exclusively in the radial direction, and are held axially prestressed in a form-locked manner in the axial direction, and without adhesive or suchlike materially joining means, in a supporting sleeve (24) which surrounds the laminated core (20), the sheet-metal laminations (22) in the laminated core (20) making touching contact with the supporting sleeve (24) in the area of their external circumference only at points, at least three contact points (26) which are distributed around the circumference, and thereby being held at least in a force-locked manner, and the layered sheet-metal laminations (22) of the laminated core (20) being held axially between holding embossed areas (32) on the supporting sleeve (24), which are arranged distributed around the circumference on each axial side and project radially inwards.

13. Magnetic return path element according to Claim 12, **characterized by** the characterizing features of at least one of claims 2 to 11.

14. Method for production of a magnetic return path element (6) according to Claim 12 or 13 for a miniature electrical drive (1) according to one of Claims 1 to 11,
**characterized in that** a multiplicity of individual sheet-metal laminations (22) which are in the form of annular discs are arranged in layers to form a cylindrical laminated core (20) and, in order to hold them, are inserted into a supporting sleeve (24) such that the sheet-metal laminations (22) are held prestressed in a force-locked manner exclusively in the radial direction, and are held axially prestressed in a form-locked manner in the axial direction, and without adhesive or suchlike materially joining means, the following method steps being carried out:
a) a flat blank (34) for the supporting sleeve (24) is stamped out from a sheet-metal material, in particular from a stainless-steel sheet,
b) the flat blank (34) is provided with all the necessary embossed areas (28), to be precise with the longitudinal beads (30) and the holding embossed areas (32, 44) for the laminated core (20) and preferably for the end shields (18a, 18b),
c) the holding embossed areas (32, 44) are deformed back onto the plane of the flat blank (34) with the exception of those holding embossed areas (32) which are provided on one axial side in order to make contact with the laminated core (20),
d) the flat blank (34) is formed into the cylindrical shape of the supporting sleeve (24), with two longitudinal edges (36a, 36b) being connected via the form-locking elements (38a, 38b) which engage in one another, and preferably via additional spot welds,
e) a cylindrical laminated core (20) is formed by stacking one on top of the other a multiplicity of sheet-metal laminations (22) which have previously been stamped out individually in the form of annular discs and have preferably been individually coated with insulation,
f) the sheet-metal laminations (22) are pressed together with a specific pressure force,
g) the laminated core (20) is inserted axially into the supporting sleeve (24) in the compressed state, with the pressure force applied, of the sheet-metal laminations (22) and with a force-locked contact with the longitudinal beads (30) until axial contact is made with the holding embossed areas (32),
h) the holding embossed areas (32) are once again stamped in radially on the other axial side of the laminated core (20),
i) the axial pressure force is released from the sheet-metal laminations (22), with the laminated core (20) making contact in a form-locked manner between the holding embossed areas (32) that are provided axially on both sides, by axial elastic expansion while maintaining axial prestressing.

## Revendications

1. Système d'entraînement miniature électrique (1), en particulier système d'entraînement à champ magnétique rotatif, excité par aimant permanent, avec un stator (2) et un élément de retour (6) de flux magnétique doux entourant le stator (2) de façon cylindrique, avec une pluralité de lamelles en tôle (22) de forme annulaire, empilées pour former un bloc de tôle (20) cylindrique,
**caractérisé en ce que** les lamelles en tôle (22) du bloc de tôle (20) sont maintenues dans une douille de support (24) qui les entoure de façon coaxiale, sous précontrainte par adhérence exclusivement dans la direction radiale, et dans la direction axiale sous précontrainte axiale par complémentarité de forme et sans adhésif ou autres moyens à contact de matière, dans lequel les lamelles en tôle (22) du bloc de tôle (20) se trouvent au niveau de leur circonférence extérieure en contact d'application avec la douille de support (24) seulement de façon ponctuelle en au moins trois points d'application (26) répartis sur la circonférence, et sont ainsi maintenues au moins par adhérence, et dans lequel les lamelles en tôle (22) empilées du bloc de tôle (20) sont maintenues axialement entre des gaufrages de maintien (32) de la douille de support (24), gaufrés radialement vers l'intérieur et disposés de façon répartie en circonférence sur chaque côté axial.

2. Système d'entraînement miniature selon la revendication 1,
**caractérisé en ce que** les lamelles en tôle (22) du bloc de tôle (20) se trouvent au niveau de leur circonférence extérieure en contact d'application avec la douille de support (24) seulement de façon ponctuelle en six points d'application (26) répartis sur la circonférence.

3. Système d'entraînement miniature selon l'une quelconque des revendications 1 ou 2,
**caractérisé en ce que** la douille de support (24) présente pour le maintien du bloc de tôle (20) des gaufrages façonnés (28) formés radialement vers l'intérieur.

4. Système d'entraînement miniature selon l'une quelconque des revendications 1 à 3,
**caractérisé en ce que** la douille de support (24) se compose d'une fine tôle d'acier spécial.

5. Système d'entraînement miniature selon l'une quelconque des revendications 1 à 4,
**caractérisé en ce que** les lamelles en tôle (22) se composent de tôle électrique, dans lequel de préférence chaque lamelle en tôle (22) individuelle présente séparément un revêtement isolant.

6. Système d'entraînement miniature selon l'une quelconque des revendications 1 à 5,
**caractérisé en ce que** les points d'application circonférentiels (26) du bloc de tôle (20) sont formés par au moins trois, de préférence six moulures longitudinales (30) de la douille de support (24), gaufrées radialement vers l'intérieur à la manière de nervures et s'étendant en particulier suivant des axes parallèles au moins sur toute la longueur axiale du bloc de tôle (20), dans lequel la douille de support (24) constitue par sa surface intérieure située entre les moulures longitudinales (30) un ajustement avec jeu et constitue par ses moulures longitudinales (30) un ajustement serré par rapport au bloc de tôle (20).

7. Système d'entraînement miniature selon l'une quelconque des revendications 1 à 6,
**caractérisé en ce que** la douille de support (24) est découpée sous forme de pièce découpée (34) dans un matériau de tôle initialement plat et façonnée selon sa forme cylindrique, dans lequel deux bords longitudinaux (36a, 36b) adjacents l'un à l'autre dans la direction circonférentielle sont reliés ensemble par des éléments à complémentarité de forme (38a, 38b).

8. Système d'entraînement miniature selon la revendication 7,
**caractérisé en ce que** les bords longitudinaux (36a, 36b) sont reliés par contact de matière au moins de façon ponctuelle, en particulier par des points de soudure, en plus des éléments à complémentarité de forme (38a, 38b) qui s'engagent les uns dans les autres.

9. Système d'entraînement miniature selon l'une quelconque des revendications 1 à 8,
**caractérisé en ce que** sur les deux côtés axiaux de la douille de support (24) est fixée une flasque (18a, 18b), notamment de préférence **en ce que** chaque flasque (18a, 18b) s'engage par une portion de maintien axialement dans la douille de support (24) et est fixée par des gaufrages de maintien (44) disposés de façon répartie en circonférence, gaufrés radialement vers l'intérieur et passant respectivement derrière un bord de maintien de la flasque.

10. Système d'entraînement miniature selon la revendication 9,
**caractérisé en ce que** les flasques (18a, 18b) sont centrées par les moulures longitudinales (30).

11. Système d'entraînement miniature selon la revendication 9 ou 10, **caractérisé en ce que** les flasques (18a, 18b) portent un ensemble de coussinets de pivotement (16a, 16b) pour un arbre de rotor (14) d'un rotor (4) disposé à l'intérieur du stator (2).

12. Elément de retour de flux magnétique doux (6) pour un système d'entraînement miniature (1) selon l'une quelconque des revendications 1 à 11, composé d'une pluralité de lamelles en tôle (22) de forme annulaire et empilées pour former un bloc de tôle cylindrique (20),
**caractérisé en ce que** les lamelles en tôle (22) sont maintenues dans une douille de support (24) qui entoure le bloc de tôle (20), sous précontrainte par adhérence exclusivement dans la direction radiale, et dans la direction axiale sous précontrainte axiale par complémentarité de forme et sans adhésif ou autres moyens à contact de matière, dans lequel les lamelles en tôle (22) du bloc de tôle (20) se trouvent au niveau de leur circonférence extérieure en contact d'application avec la douille de support (24) seulement de façon ponctuelle en au moins trois points d'application (26) répartis sur la circonférence, et sont ainsi maintenues au moins par adhérence, et dans lequel les lamelles en tôle (22) empilées du bloc de tôle (20) sont maintenues axialement entre des gaufrages de maintien (32) de la douille de support (24), gaufrés radialement vers l'intérieur et disposés de façon répartie en circonférence sur chaque côté axial.

13. Elément de retour de flux selon la revendication 12,
**caractérisé par** les particularités caractérisantes d'au moins l'une des revendications 2 à 11.

14. Procédé de fabrication d'un élément de retour de flux (6) selon la revendication 12 ou 13 pour un système d'entraînement miniature électrique (1) selon l'une quelconque des revendications 1 à 11,
**caractérisé en ce qu'**une pluralité de lamelles en tôle (22) individuelles de forme annulaire est empilée pour former un bloc de tôle cylindrique (20) et insérée dans une douille de support (24) pour le maintien de telle sorte que les lamelles en tôle (22) sont maintenues sous précontrainte par adhérence exclusivement dans la direction radiale et dans la direction axiale sous précontrainte axiale par complémentarité de forme et sans adhésif ou autres moyens à contact de matière, dans lequel sont réalisées les étapes de procédé suivantes :
a) découper une pièce découpée (34) à plat pour la douille de support (24) dans un matériau de tôle, en particulier dans une tôle d'acier spécial,
b) munir la pièce découpée (34) à plat de tous les gaufrages façonnés (28) nécessaires, notamment des moulures longitudinales (30) et des gaufrages de maintien (32, 44) pour le bloc de tôle (20) et de préférence pour les flasques (18a, 18b),
c) façonner inversement les gaufrages de maintien (32, 44) dans le plan de la pièce découpée à plat (34) à l'exception des gaufrages de maintien (32) prévus sur un côté axial pour l'application du bloc de tôle (20),
d) transformer la pièce découpée à plat (34) en forme cylindrique de la douille de support (24), dans lequel deux bords longitudinaux (36a, 36b) sont reliés par des éléments à complémentarité de forme (38a, 38b) s'engageant les uns dans les autres et de préférence par des points de soudure supplémentaires,
e) former un bloc de tôle cylindrique (20) par empilage d'une pluralité de lamelles en tôle (22) préalablement découpées individuellement en forme annulaire et de préférence individuellement munies d'un revêtement isolant,
f) compresser les lamelles en tôle (22) avec une force de compression déterminée,
g) introduire axialement le bloc de tôle (20) dans la douille de support (24) à l'état compressé, sollicité par la force de compression, des lamelles en tôle (22) et sous application par adhérence aux moulures longitudinales (30) jusqu'à application axiale contre les gaufrages de maintien (32),
h) gaufrer de nouveau radialement les gaufrages de maintien (32) sur l'autre côté axial du bloc de tôle (20),
i) relâcher la force de compression axiale des lamelles en tôle (22), dans lequel le bloc de tôle (20) s'applique par expansion élastique axiale tout en maintenant une précontrainte axiale par complémentarité de forme entre les gaufrages de maintien (32) axialement bilatéraux.
